# FASCICULE DE BREVET EUROPEEN

(11) **EP 0 536 768 B1**
(45) Date de publication et mention de la délivrance du brevet: **20.07.1994**
(21) Numéro de dépôt: 92117272.2
(22) Date de dépôt: 04.04.1989
(51) Int. Cl.: A01C 7/04

(54) **Distributeur pour semoir monograine**
Verteiler für eine Einzelkörnersämaschine
Distributor for a precision drill

(30) Priorité: 22.04.1988 FR 8805398
(43) Date de publication de la demande: 14.04.1993
(62) Demande divisionnaire de: 89400924.0
(73) Titulaire: ATELIERS RIBOULEAU, F-79240 Largeasse (FR)
(72) Inventeur: Ribouleau, Michel, F-75015 Paris (FR)
(74) Mandataire: Polus, Camille

(56) Documents cités:
- DE-A- 2 517 758
- FR-A- 1 410 390
- FR-A- 1 585 445
- FR-A- 2 174 341
- US-A- 3 990 606

## Description

Les semoirs monograines sont de plus en plus appréciés des cultivateurs du fait de la régularité et de la précision qu'ils permettent.

Ces semoirs sont généralement munis d'un distributeur comportant un carter de forme générale cylindrique à l'intérieur duquel est monté rotatif, sur un axe horizontal, un disque distributeur qui est muni d'orifices espacés circonférentiellement et qui sépare un réceptacle à graines d'un dispositif d'aspiration muni d'un élément de réglage de l'aspiration de telle sorte que les orifices sont soumis à une dépression de retenue des graines prélevées dans le réceptacle pendant au moins une partie de leur déplacement angulaire; des moyens d'élimination des graines doubles constitués par un organe déflecteur et, à la partie inférieure du carter, une ouverture de décharge des graines. Chacune de ces graines est ainsi séparée rigoureusement des autres et déposée seule dans le sillon à ensemencer.

Les distributeurs de ce type, tel que celui décrit dans les FR-A-2 135 702 et 2 174 341, comportent un disque muni d'ailettes qui facilitent l'alimentation des orifices en graines, ainsi que la conduite et le lacher précis de ces graines, ce qui permet une sélection automatique très simple des graines tout en n'exigeant qu'une dépression faible. Toutefois, le disque ne pouvant comporter qu'un nombre limité d'ailettes, c'est-à-dire d'alvéoles contenant chacun une graine, seul un accroissement de la vitesse de rotation du disque permet d'augmenter la densité du semis, ce qui interdit les semis de forte densité.

D'autres distributeurs (FR-A-1 585 445) comportent un disque dépourvu d'ailettes qui peut, par suite, être percé d'un grand nombre d'orifices et qui de ce fait s'adapte bien au forte densité de semis. Malheureusement, ces distributeurs exigent une dépression importante sans quoi les graines ne sont pas entraînées, de sorte qu'ils sont peu adaptés aux graines lourdes et de gros calibres.

Le cultivateur qui, généralement, doit effectuer plusieurs types de semis se trouve donc confronté à un choix difficile ou dans l'obligation de disposer de plusieurs semoirs.

La présente invention a pour but de remédier à cet inconvénient en fournissant un distributeur pour semoir monograine qui peut être réglé pour différents types de graines.

Cette invention a en effet pour objet un distributeur du type ci-dessus dans lequel l'organe déflecteur est mobile et on prévoit une manette commandant à la fois l'élément de réglage de l'aspiration et la position de l'organe déflecteur.

Selon une autre caractéristique de l'invention, ladite manette est pivotante.

De préférence, l'organe déflecteur mobile est monté pivotant, l'une de ses extrémités étant portée par un axe mobile déplacé par le pivotement de la manette de commande de l'élément de réglage de l'aspiration.

L'organe d'obturation amovible combinant ses effets avec celui de la manette de réglage de la prise d'air extérieur et éventuellement celui du sélecteur permet de faire varier la dépression et ainsi d'utiliser le distributeur avec un disque à ailettes ou avec un disque simple selon la nature du semis à effectuer.

La description ci-dessous de modes de réalisation, donnés à titre d'exemple non limitatif et représentés aux dessins annexés, fera d'ailleurs ressortir les avantages et caractéristiques de l'invention. Sur ces dessins :

La figure 1 est une vue en perspective éclatée d'un distributeur pour semoir monograine selon l'invention, muni d'un disque à ailettes.

La figure 2 montre le distributeur de la Fig.1 une fois assemblé, en coupe suivant la ligne 2-2 de la Fig.3.

La figure 3 est une vue en coupe suivant la ligne 3-3 de la Fig.2.

La figure 4 est une vue en coupe suivant la ligne 4-4 de la Fig.2.

LA figure 5 est une vue partielle, analogue à la Fig.2, montrant une variante de réalisation des moyens d'élimination des graines doubles.

La figure 6 est une vue analogue à la Fig.2 du distributeur muni d'un disque simple.

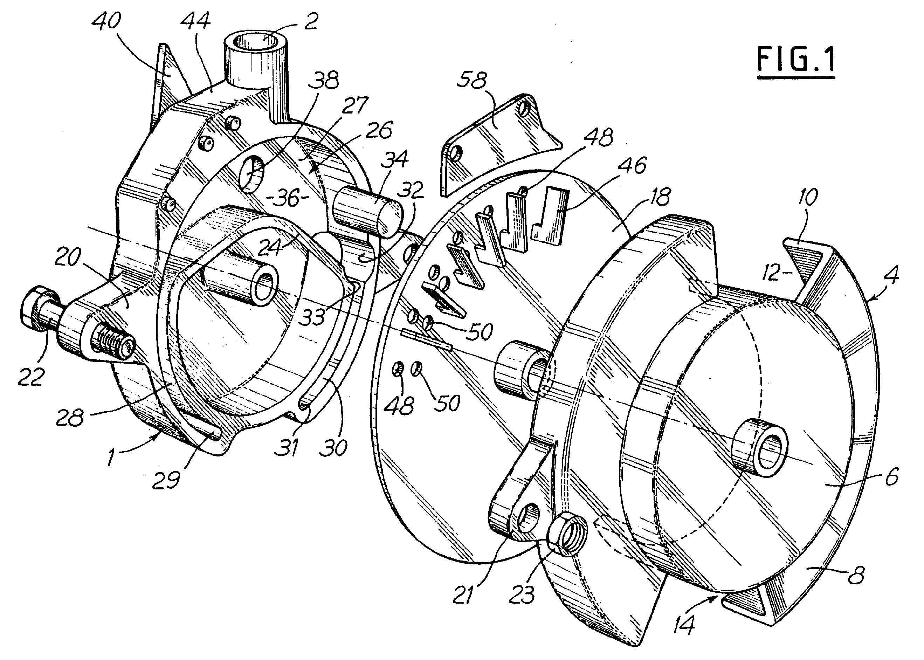

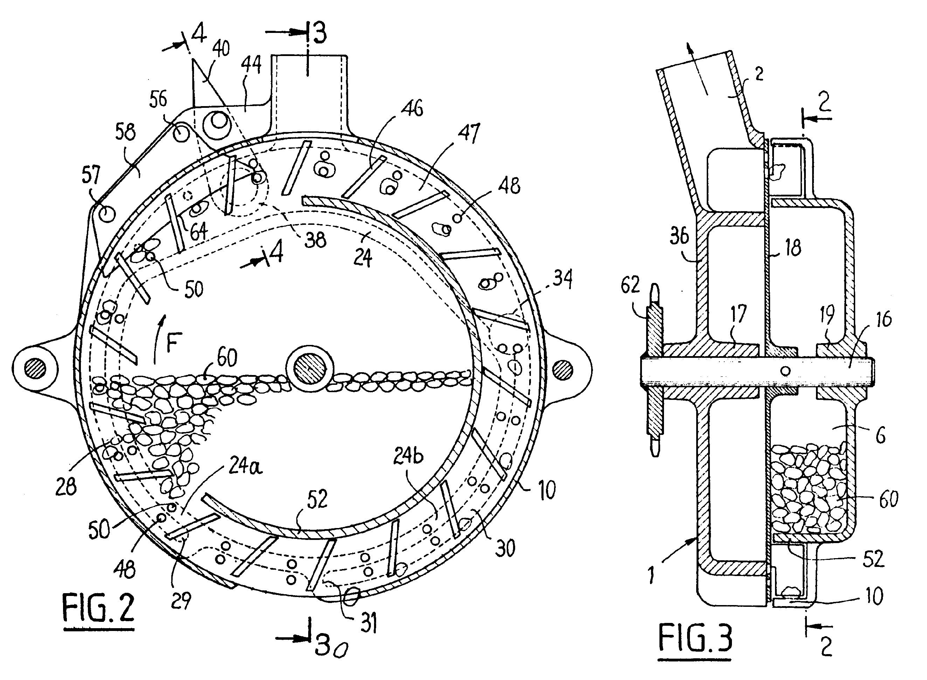

Un distributeur pour semoir monograine comporte, comme le montre plus paticulièrement la Fig.1, un carter de forme générale cylindrique qui est constitué par un boîtier 1 muni à sa partie supérieure d'un cheminée 2 de liaison à un organe d'aspiration, ou à une autre source de dépression appropriée, et par un couvercle 4 qui forme un réceptacle de graines 6 entouré par une collerette 8 munie à sa périphérie d'un rebord 10 dirigé vers le boîtier 1. La collerette 8 est interrompue à sa partie supérieure, en 12, pour assurer la communication de son volume interne avec l'atmosphère extérieure et à sa partie inférieure, en 14, pour constituer une ouverture de décharge des graines. Le boîtier 1 et le couvercle 4 sont montés sur un même axe 16 par l'intermédiaire de portées cylindriques, respectivement 17 et 19, qui permettent à cet arbre de tourner par rapport à eux (Fig.3).

L'axe 16 est rendu solidaire d'un disque distributeur 18 qui est en contact étanche avec la paroi du boîtier 1 et contre lequel le couvercle 4 est maintenu par tout moyen approprié. Par exemple, dans le mode de réalisation représenté, le boîtier 1 et le couvercle 4 comportent chacun deux pattes latérales respectivement 20 et 21 qui sont traversées par deux vis 22 et serrées les unes contre les autres au moyen d'écrous 23.

A l'intérieur du boîtier 1, une cloison 24 délimite avec la paroi de ce boîtier un canal de dépression 26 en communication avec la cheminée d'aspiration 2. La cloison 24 ayant à sa partie supérieure sensiblement la forme d'un V à l'envers, le canal de dépression 26 comporte au voisinage de la cheminée d'aspiration 2 une partie supérieure large, 27, sensiblement en forme de croissant. Chacune des extrémités de ce croissant est prolongée par une branche étroite périphérique, respectivement 28 et 30, ces deux branches se dirigeant l'une vers l'autre mais ne se rejoignant pas. En effet les extrémités des branches 28 et 30 sont fermées à la partie inférieure du boîtier 1 au droit de l'ouverture de décharge des graines du couvercle 4. Leurs extrémités 29, 31 sont, dans le mode de réalisation représenté, légèrement décalées par rapport à cette ouverture 14 de telle sorte que l'extrémité 29 de la branche 28 est plus élevée que l'extrémité 31 de la branche 30. En fait l'extrémité 30 de la branche descendante en considérant le sens de rotation du disque distributeur 18, indiqué par la flêche F sur la Fig.2, est normalement au point le plus bas du distributeur.

A la partie supérieure de la branche 30, c'est-à-dire de la branche descendante, la paroi du boîtier 1 ainsi que la face en regard de la cloison 24 comportent chacune un évidement incurvé, respectivement 32 et 33, qui délimitent ensemble une cavité de logement d'un organe d'obturation, constitué dans le mode de réalisation représenté par un bouchon cylindrique 34 mais pouvant être formé par une trappe, une glissière ou tout autre organe approprié. Ce bouchon 34 a une longueur axiale égale à la profondeur du boîtier 1 de sorte que lorsqu'il est en place dans la cavité 32,33 il obture totalement l'entrée de la branche 30 du canal de dépression et isole celle-ci de la cheminée d'aspiration 2. Le bouchon 34 est toutefois amovible et peut facilement être retiré lorsque la branche 30 doit être soumise à une dépression.

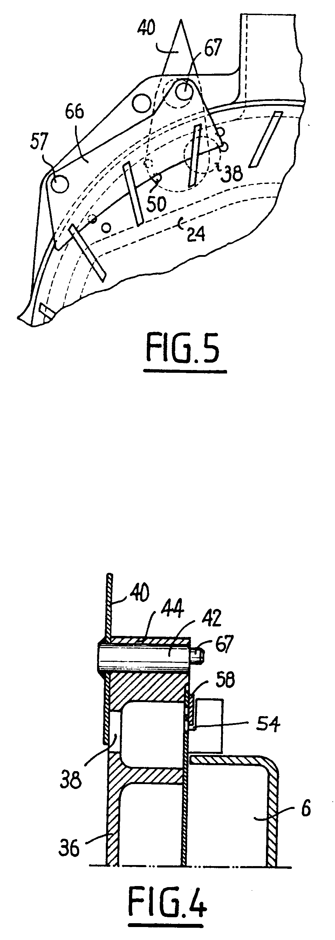

Le fond 36 du boîtier 1 est, par ailleurs, muni, au voisinage de la cheminée d'aspiration 2, d'une prise d'air 38 qui est associée avec une manette 40 pivotant derrière le fond 36 sur un axe 42 qui traverse un bossage extérieur 44 de la paroi du carter 1 (Fig.4).

Dans le mode de réalisation représenté sur les Fig.1 à 4, le disque distributeur 18 est muni d'une série d'ailettes 46 toute en sailie en direction du couvercle 4 et régulièrement espacées sur sa circonférence et comporte deux rangées circonférentielles de trous 48, 50, un trou de chacune des rangées étant contenu dans l'alvéole 47 délimité par les deux ailettes 46 voisines. Le diamètre des orifices 48,50 de même que leur position radiale sont telles que les trous 48 de la rangée radialement extérieure se trouvent en regard de la branche étroite 28 ou 30 du canal de dépression tandis que les trous 50 de la rangée interne se placent en regard de la portion cylindrique 24a,24b de la cloison 24 qui délimite ces branches étroites 28 et 30. A la partie supérieure du carter les deux rangées de trous 48,50 débouchent dans la partie large 27 du canal de dépression, comme le montre plus particulièrement la Fig.2.

Sur la face du disque opposée au canal de dépression, les alvéoles 47 délimitées par les ailettes 46 adjacentes sont fermées radialement à l'extérieur par le bord 10 de la collerette 8 et à l'intérieur par un prolongement cylindrique 52 de la paroi du réceptacle à graines qui s'étend en regard de la partie descendante du canal de dépression sur un peu plus de la moitié d'une circonférence c'est-à-dire jusqu'à un point situé au-delà de l'ouverture 14 de décharge des graines.

De l'autre côté du distributeur, c'est-à-dire au voisinage de la partie ascendante du canal de dépression, les alvéoles sont en communication avec le réceptacle 6. En outre, le bossage 44 porte, par l'intermédiaire de deux axes 56 et 57, un organe déflecteur 58 sur lequel glisse la face du disque distributeur 18 opposée au canal de dépression. L'organe 58 est de préférence une plaque dont le bord inférieur est rectiligne et dont le profil est tel qu'elle recouvre partiellement, puis complètement les trous 48 de la rangée extérieure au fur et à mesure de l'accroissement de la largeur du canal de dépression 26.

Le distributeur ainsi constitué permet d'assurer avec précision, en utilisant une faible dépression, des semis dont la densité n'est pas très forte. En effet lorsque, des graines 60 ayant été placées dans le réceptacle central 6, l'arbre 16 est entraîné en rotation, par exemple par l'intermédiaire d'un pignon de chaine 62, des graines pénètrent dans les alvéoles 47 situées à la partie inférieure du carter, au-delà de la paroi 52, et sont entraînées par la dépression régnant dans le canal 26 et tout particulièrement dans la branche ascendante 28. Par suite, des graines sont appliquées, généralement par groupe de deux ou trois, contre chacun des trous 48 correspondant à cette branche ascendante et sont entraînées en direction de la partie large 27 du canal 26. A son entrée dans cette partie élargie chaque groupe de graines bute contre le déflecteur 58 qui le repousse en direction des orifices 50 de la rangée interne de telle sorte que seule l'une des graines reste et que les autres graines retombent dans le réceptacle central 6. Une graine est ainsi appliquée par la dépression contre chacun des trous 50 et entraînée par le disque distributeur 18 jusqu'au droit du bouchon 34. En ce point, l'action de la dépression est interrompue et une graine tombe par simple gravité dans l'alvéole 47 qui la contient où elle est retenue par l'ailette 46 et par le rebord 10 du couvercle jusqu'au moment où elle parvient à l'ouverture 14 de décharge qui lui permet de tomber dans le sillon à ensemencer.

Pendant toute cette opération, la manette 40 a été maintenue dans la position représentée sur la Fig.2 où elle ferme totalement la prise d'air 38 de façon à assurer à l'intérieur du canal de dépression 26 une dépression maximale et à permettre la distribution de graines relativement lourdes, telles que des graines de maïs ou analogues, ou a été déplacé de façon à dégager une portion plus ou moins importante de cette prise d'air et ainsi à réduire l'importance de la dépression à l'intérieur du canal 26 pour faciliter la distribution des graines légères telles que des graines de betteraves.

Les graines légères étant souvent également des graines de faible dimension, il peut être avantageux de déplacer le déflecteur pour rapprocher plus rapidement le bord rectiligne 64 du déflecteur des trous 50 lorsque l'on ouvre la prise d'air 38. On utilise donc de préférence, dans ce cas, comme déflecteur, une plaque 66 qui est fixée d'une part sur l'axe fixe 57, et d'autre part sur un axe mobile 67 excentré sur l'axe 42 de pivotement de la manette 40 comme le montre les Fig.4 et 5. De cette manière un pivotement de l'extrémité de la manette 40, vers la gauche en regardant la Fig.5, provoque simultanément un accroissement de l'ouverture de la prise d'air 38 et un abaissement de l'extrémité supérieure de la plaque 66 de sorte que celle-ci se rapproche des trous 50 qu'elle peut même fermer partiellement. Bien entendu, un pivotement de la manette 40 en sens inverse, pour fermer la prise d'air, soulève au contraire l'extrémité supérieure de la plaquette 60 et permet à des graines de plus grande dimension d'être retenues de manière efficace par une dépression plus forte s'exerçant à travers les trous 50.

Le distributeur peut donc, par le simple réglage de la position de la manette 40, être adapté à différents types de graines et assurer leur mise en terre une à une de manière extrêmement fiable et régulière.

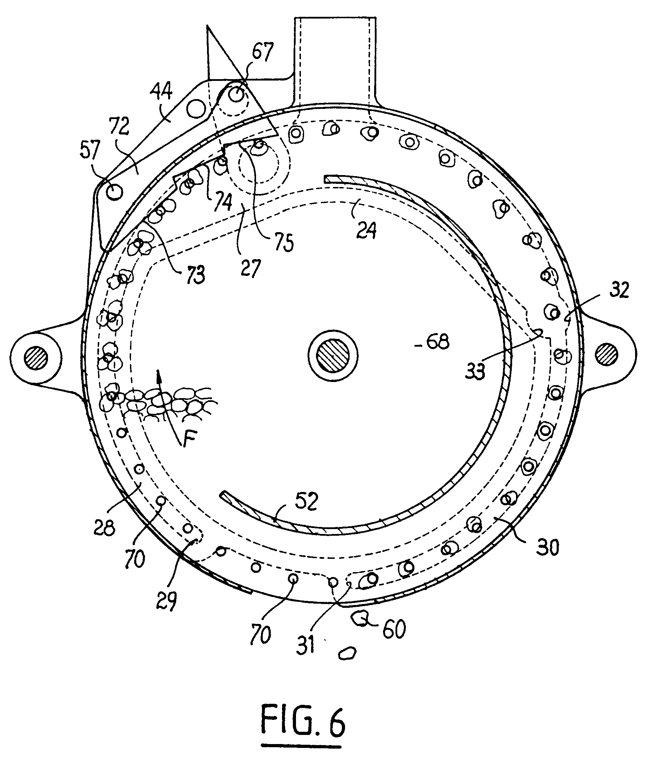

Ce distributeur peut également comporter à la place du disque distributeur 18 un disque distributeur 68 dépourvu d'ailette (Fig.6) et ne comportant, qu'une seule rangée circonférentielle de trous 70. Dans ce cas les trous 70 sont ménagés de façon à correspondre au canal de dépression 26 et tout particulièrement au volume interne des branches étroites 28 et 30. En outre, le bouchon 34 est retiré de sorte que la totalité du canal 26 est soumis à la dépression et que seul les trous 70 se trouvant dans l'espace laissé libre entre les extrémités 29 et 31 des branches étroites 28 et 30 ne sont pas soumis à cette même dépression.

A l'entrée de la partie évasée 27 du canal de dépression 26 le bossage 44 porte en qualité de déflecteur une plaque 72 dont le bord inférieur est cranté et forme par suite une succession de rampes 73, 74, 75, inclinées par rapport à la circonférence formée par les trous 70. La plaque 72 est de préférence montée sur l'axe fixe 57 et sur l'axe mobile 67 de sorte qu'elle peut être déplacée par rapport à la rangée de trous 70 en fonction de la position de la manette 40 c'est-à-dire de l'ouverture de la prise d'air 38. Ainsi, comme dans le mode de réalisation précédent, la position de la plaque 72 peut varier en même temps que l'importance de la dépression existant dans le canal 26.

Cette dépression doit cependant toujours être importante et elle doit exister dans toute l'étendue du canal 26. En effet lors de la rotation du disque 68, les graines 60 sont prélevées dans le réceptacle 6 par l'effet d'aspiration s'exerçant à travers les trous 70 en regard de la branche étroite 28. Elles s'agglutinent en général par groupe de deux ou trois contre chacun de ces trous et sont entraînées par ces derniers en direction de la plaque 72 ou plus exactement des rampes 73, 74 et 75. En butant successivement contre ces rampes, le groupe de graines est déplacé et seule l'une de ces dernières reste appliquée contre le trou 70, les autres retombant dans le réceptacle central. La graine 60 restée contre le trou 70 est déplacée tout le long du canal de dépression 26 jusqu'à l'extrémité 31 de la branche étroite 30 c'est-à-dire pratiquement jusqu'au moment où elle se trouve en regard de l'ouverture de décharge 14. Elle tombe alors sur le sol.

Comme dans le mode de réalisation précédent, l'importance de la dépression de même que la position de l'organe déflecteur, ou plaque de sélection, peuvent être réglées de manière extrêmement simple en fonction de la nature des graines. Par ailleurs, le distributeur peut facilement être adapté aux différents types de semis puisque le remplacement du disque 18 par le disque 68, ou inversement, nécessite simplement l'ouverture du couvercle 4 pour permettre de faire glisser le premier disque hors de l'axe 16, de retirer ou de remettre le bouchon 34, puis d'enfiler le nouveau disque sur l'axe 16 avant de remettre en place le couvercle 4. De telles manoeuvres peuvent facilement être exécutées par un cultivateur de sorte qu'il suffit à celui-ci de posséder un semoir et plusieurs disques distributeurs pour pouvoir effectuer de manière efficace toute sorte de semis en étant assuré de pouvoir utiliser la dépression et la cadence de semence les plus appropriées.

Il est bien évident que le distributeur peut également comporter un disque muni d'ailettes et percé d'une seule rangée de trous pour un semis de graines lourdes, de faible densité. Un tel disque est de préférence utilisé avec l'organe obturateur 34 en place afin de limiter la demande de dépression.

De même le disque distributeur pourrait comporter plus de deux rangées de trous.

## Revendications

1. Distributeur pour semoir monograine, comportant un carter de forme générale cylindrique à l'intérieur duquel est monté rotatif, sur un axe horizontal, un disque distributeur (18,68) qui est muni d'orifices espacés circonférentiellement et qui sépare un réceptacle à graines (6) d'un dispositif d'aspiration muni d'un élément (38) de réglage de l'aspiration de telle sorte que les orifices sont soumis à une dépression de retenue des graines prélevées dans le réceptacle pendant au moins une partie de leur déplacement angulaire ; des moyens d'élimination des graines doubles constitués par un organe déflecteur (66,72) et, à la partie inférieure du carter, une ouverture de décharge des graines, caractérisé en ce que l'organe déflecteur (66,72) est mobile et en ce que l'on prévoit une manette (40) commandant à la fois l'élément (38) de réglage de l'aspiration et la position de l'organe déflecteur (66,72).

2. Distributeur suivant la revendication 1, caractérisé en ce que la manette (40) est pivotante.

3. Distributeur suivant la revendication 1 ou 2, caractérisé en ce que l'organe déflecteur mobile (66,72) est monté pivotant, l'une de ses extrémités étant portée par un axe mobile (67) déplacé par le pivotement de la manette (40) de commande de l'élément (38) de réglage de l'aspiration.

## Patentansprüche

1. Verteiler für eine Einzelkornsämaschine, mit einem im wesentlichen zylinderförmigen Gehäuse, in dem auf einer horizontalen Achse eine Verteilerscheibe (18, 68) drehbar angebracht ist, welche mit längs des Umfangs verteilten Öffnungen versehen ist und einen Kornbehälter (6) von einer Ansaugvorrichtung trennt, welche mit einem Element (38) zur Ansaugregulierung versehen ist derart, daß die Öffnungen einem Unterdruck unterworfen werden, der die im Behälter entnommenen Körner wenigstens während eines Teils von deren winkelmäßiger Versetzung festhält; Mitteln zur Beseitigung von Doppelkörnern, die durch eine Ablenkeinrichtung (66, 72) gebildet sind, und, am unteren Teil des Gehäuses, einer Abgabeöffnung für die Körner, dadurch gekennzeichent, daß die Ablenkeinrichtung (66, 72) beweglich ist, und daß ein Bedienelement (40) vorgesehen ist, welches sowohl das Element (38) zur Ansaugregulierung als auch die Stellung der Ablenkeinrichtung (66, 72) steuert.

2. Verteiler nach Anspruch 1, dadurch gekennzeichnet, daß das Bedienelement (40) schwenkbar ist.

3. Verteiler nach Anspruch 1 oder 2, dadurch gekennzeichnet, daß die bewegliche Ablenkeinrichtung (66, 72) schwenkbar angebracht ist, wobei das eine ihrer Enden auf einer beweglichen Achse (67) sitzt, die durch das Schwenken des Bedienelements (40) zur Steuerung des Elements (38) zur Ansaugregulierung verschoben wird.

## Claims

1. Distributor for a seed spacing drill, including a casing of cylindrical overall shape, inside which is mounted, so that it can rotate, on a horizontal shaft, a distributor disc (18,68) which is equipped with circumferentially-spaced orifices and which separates a seed container (6) from a suction device equipped with an element (38) for adjusting the suction, so that the orifices are subjected to a depression for retaining the seeds taken up from the container during at least a part of their angular travel; means for eliminating double seeds which means consist of a deflector member (66,72) and, at the lower part of the casing, a seed discharge opening, chracterized in that the deflector member (66,72) can move and in that an operating lever (40) is provided, controlling both the element (38) for adjusting the suction and the position of the deflector member (66,72).

2. Distributor according to Claim 1, characterized in that the operating lever (40) can pivot.

3. Distributor according to Claim 1 or 2, characterized in that the movable deflector member (66,72) is mounted so that it can pivot, one of its ends being carried by a movable shaft (67) which is moved by the pivoting of the operating lever (40) for controlling the element (38) for adjusting the suction.
